# EUROPEAN PATENT APPLICATION

(11) **EP 4 789 935 A1**
(43) Date of publication of application: **12.08.2026**
(21) Application number: 25157125.3
(22) Date of filing: 11.02.2025
(51) Int. Cl.: B60T 17/08

(54) **SPRING BRAKE ACTUATOR, BRAKE SYSTEM FOR A VEHICLE, VEHICLE, AND METHOD FOR MANUFACTURING A SPRING BRAKE ACTUATOR**

(71) Applicant: ZF CV Systems Europe BV, 1170 Brüssel (BE)
(72) Inventor: SWIATKIEWICZ, Jakub, 54-109 Wroclaw (PL)
(74) Representative: Rabe, Dirk-Heinrich

(57) **Abstract**

A spring brake actuator (10) comprises an element (12). The element (12) comprises an aperture (14). The spring brake actuator (10) comprises a sealing element (16) inserted into the aperture (14). The sealing element (16) is at least in part made from a swelling elastomer (18).

## Description

The invention relates to a spring brake actuator, a brake system for a vehicle, a vehicle, and a method for manufacturing a spring brake actuator.

Various spring brake actuators comprise elements having apertures that need to be sealed. Examples of such spring brake actuators are spring brake actuators, brake chambers or the like. These components are typically exposed to varying weather conditions over many years and the apertures need to be protected from water and dust entering the inside of the components.

It is common in spring brake actuators, such as spring brake actuators or brake chambers, to seal an aperture by means of a plug made from plastic, such as from thermoplastic elastomers (TPE), polyethylene (PE), polypropylene (PP).

Although these known plugs are generally reliable, occasional leakages still leave room for improvement.

It is an object of the invention, to improve sealing of apertures in spring brake actuators.

This object is achieved by a spring brake actuator according to claim 1.

A spring brake actuator achieving the object comprises an element having an aperture. The spring brake actuator comprises a sealing element inserted into the aperture. The sealing element is at least in part made from a swelling elastomer.

Swelling elastomers are elastic materials that swell naturally by absorption when exposed to an appropriate swelling agent, typically oil and/or water, especially salt water.

The sealing element made at least in part from a swelling elastomer provides for a particularly high degree of tightness of the sealing element in the aperture.

Commonly, the compression exerted on the sealing element when being inserted into the aperture is completely elastic. Thus, the common sealing element can only expand as much as it has been compressed. This limits the pressure the sealing element can exert on a boundary surface of the aperture. As a consequence, the achievable tightness is limited. The swelling elastomer, in contrast, can expand or "swell" more than the common sealing element or sealing material. This leads to advantageous tightness. However, it will be apparent that also the swelling elastomer can additionally expand and exert pressure on the boundary surface of the aperture out of its elasticity. Especially this kind of combined expansion - elastic and swelling - can provide for highly advantageous tightness.

The additional swelling of the swelling elastomer especially provides for improved tightness in cases of strong thermal expansion of the material of the element comprising the aperture. The additional expansion due to swelling can cover more thermal expansion of the element comprising the aperture than the common, purely elastic sealing materials.

Also, the swelling elastomer reduces sensitivity of the sealing elements to manufacturing tolerances for the aperture as well as the sealing element. For example, an actual diameter of the aperture may vary in production between different parts. This may, for example, be due to varying thicknesses of paint on the boundary surface of the aperture. The thickness of paint on the boundary surface may vary considerably and a common sealing element must is usually designed in a manner that it fits into apertures of all expected sizes. However, in a case of a rather thin layer of paint the common sealing element may not seal perfectly tightly. The swelling elastomer can make up for this due to its additional expansion.

Furthermore, the sealing element that is made at least in part from the swelling elastomer simplifies assembly of the element with the sealing element. Commonly, a sealing element is mounted in the aperture by press-fitting the sealing element into the aperture. With the swelling elastomer, the strength of the press-fit and, thus, the force necessary to insert the sealing element into the aperture can be smaller, because the swelling elastomer can be swollen after its insertion into the aperture.

The sealing element may preferably be made completely from the swelling elastomer. This makes the sealing element simple to manufacture.

Swelling elastomers are known in the field of oil production. US 2008/0017376 A1 discloses a list of swelling elastomer materials usable to put the present disclosure into practice. Further background information is disclosed in [1] M. Akhtar, S. Qamar, M. Mehdi and A. Hussain, "Diffusion-based swelling in elastomers under low- and high-salinity brine.," Journal of Elastomers & Plastics. 51, 2018; [2] T. Pervez, S. Qamar and M. Velden, "Comparison between fresh and exposed swelling elastomer.," Journal of Elastomers and Plastics, vol. 44(3), pp. 237-250, 2012; [3] S. Qamar, T. Pervez and M. Akhtar, "Performance evaluation of water-swelling and oil-swelling elastomers.," Journal of Elastomers and Plastics, vol. 48(6), pp. 535-545, 2015; [4] P. Raffa, C. S. P. Peixoto, P. F. A. da Costa, L. M. Polgar, A. V. Machado, P. Hough and M. van Duin, "Optimization of hybrid oil/water-swelling ethylene/propylene/diene monomer compounds," Journal of Applied Polymer Science, vol. 137, no. 48, 2020.

According to an embodiment, the swelling elastomer is configured to swell when exposed to oil. This is especially advantageous in applications in which the sealing element is typically exposed to oil during use of the spring brake actuator, such as in a gearbox.

According to an embodiment, the swelling elastomer is configured to swell when exposed to water. Preferably, the swelling elastomer is configured to swell when exposed to saltwater. Vehicles and spring brake actuators are typically exposed to various weather conditions during use and for years or even decades. This typically includes exposure to water and in winter especially salt water from de-iced roads. Thus, the water and saltwater maintain or increase swelling of the swelling elastomer and, thereby, maintain or increase tightness of the sealing element in the aperture. A swelling elastomer configured to swell when exposed to water and/or saltwater is a highly simple solution for achieving a high degree of tightness.

According to an embodiment, the aperture is circular in cross-section. This provides for a particularly even distribution of tension in the sealing element and of the pressure exerted on the boundary surface of the aperture resulting in a high degree of tightness.

According to an embodiment, the sealing element is circular in cross-section. This provides for a particularly even distribution of tension in the sealing element and of the pressure exerted on the boundary surface of the aperture resulting in a high degree of tightness.

According to an embodiment, the sealing element is a plug. This provides for a simple design of the sealing element while the sealing element is easy to insert into the aperture.

The sealing element may comprise a first portion inserted into the aperture. The first portion may preferably be circular in cross-section.

The sealing element may comprise a second portion configured to abut the element when the first portion is inserted into the aperture. This second portion, thus, functions as a stop for making sure that the sealing element is inserted into the aperture only as far as intended by the designer. This simplifies assembly and ensures proper tightness.

At least the first portion may be made from the swelling elastomer. When the second portion is made from a different material, such as from thermoplastic elastomers (TPE), polyethylene (PE), polypropylene (PP) or the like, this may provide for a more cost-effective sealing element, while still providing for high tightness. However, both the first portion and the second portion may be made from the swelling elastomer or even from different swelling elastomers.

According to an embodiment, the spring brake actuator comprises a chamber, such as a brake chamber and/or a chamber of a pneumatic or hydraulic actuator. The element may be a housing surrounding the chamber. The sealing element may be configured to seal the chamber from the environment.

The sealing element made from the swelling elastomer has proven highly beneficial in this application. The spring brake actuator is typically arranged close to a wheel of the vehicle. The wheel typically sprays the parts surrounding it with water from a wet road and sometimes saltwater from a de-iced road. Thus, the sealing element provides for high degree of tightness for this highly exposed spring brake actuator.

A spring brake actuator is a common device in commercial vehicles having pneumatic brake systems. A spring brake actuator typically combines service and parking/emergency braking functions. It typically comprises a spring for parking or emergency braking and a first pressure chamber, wherein a given pressure in the first pressure chamber counteracts the spring. The first pressure chamber is pressurized during normal operation. If the pressure is lost due to a failure or because the vehicle is parked and powered off, the spring is free to act to engage the brake. The spring brake actuator typically further comprises a second pressure chamber for service braking, wherein a given air pressure in the second pressure chamber activates a diaphragm or piston to apply the brake during normal driving. This dual-function design ensures reliable braking performance, providing a fail-safe mechanism that automatically applies the brakes in emergencies or when the vehicle is parked.

The object is also achieved by a brake system according to claim 12.

A brake system achieving the object is configured for a vehicle and comprises a spring brake actuator as described above.

The object is also achieved by a vehicle according to claim 13.

A vehicle achieving the object comprises a spring brake actuator as described above and/or a brake system as described above.

The sealing element can preferably be exposed to the environment when the vehicle is in service.

The vehicle can be, for example, a commercial vehicle, a truck, a passenger car or a bus. The vehicle can be, for example, a road vehicle or a rail vehicle. The vehicle can be, for example, a single vehicle, a tractor for a tractor-trailer combination, a trailer for a tractor-trailer combination or a tractor-trailer combination.

The object is also achieved by a method according to claim 14.

The object is also achieved by a method for manufacturing a spring brake actuator, wherein the spring brake actuator comprises an element having an aperture. The method comprises providing a sealing element at least in part made from a swelling elastomer. The method comprises inserting the sealing element into the aperture. The method comprises swelling the sealing element by exposing the sealing element to a swelling agent. The spring brake actuator may be configured as described above.

The aperture and the sealing element may be configured to form a press-fit connection before swelling. Inserting the sealing element into the aperture may comprise establishing the press-fit connection between the sealing element and the aperture. A press-fit connection is a simple and yet reliable approach to fixing the sealing element in the aperture during assembly before swelling as well as to improve tightness after the assembly during use of the vehicle.

Any ordinal numbers used herein merely simplify reference and are not to be construed as limiting with respect to the total number of elements for which the ordinal numbers are used. In particular, the existence of the second element does not necessarily mean that a first element exists.

If devices and methods are described herein, the methods described can advantageously be developed further by the embodiments and individual features of the devices, and vice versa.

The invention is described in more detail below with reference to examples, which are shown in schematic drawings.
Fig. 1 shows a spring brake actuator.
Fig. 2 shows the spring brake actuator of Fig. 1 in a different view.
Fig. 3 shows a part of the spring brake actuator in more detail.
Fig. 4 shows a vehicle.
Fig. 5 shows a method for manufacturing a spring brake actuator.

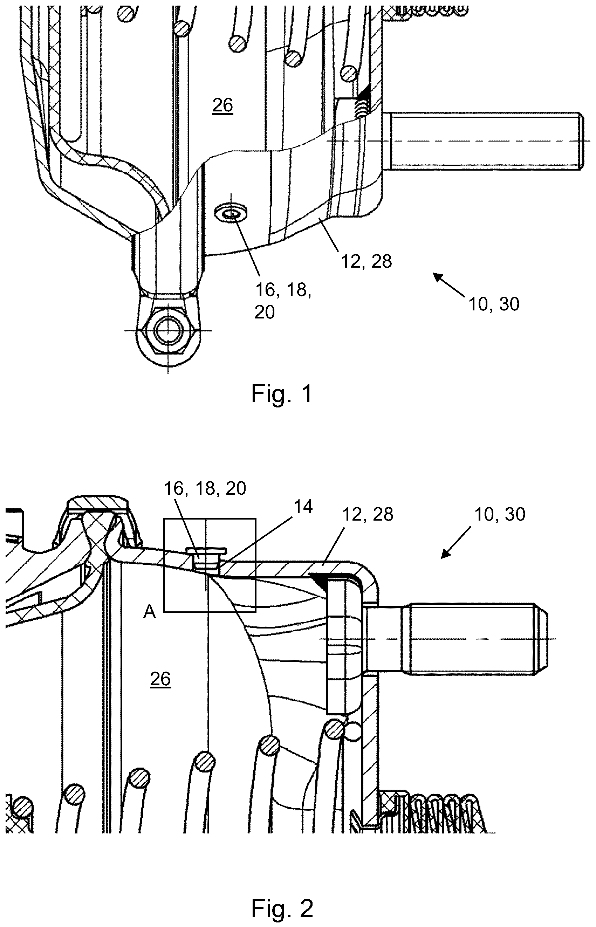

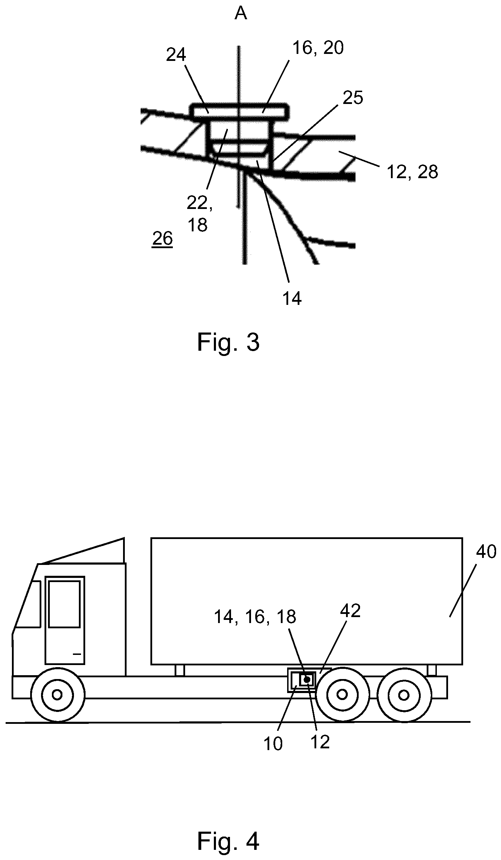

Fig. 1 shows a spring brake actuator 10 in a partly sectional representation. Fig. 2 shows the spring brake actuator 10 of fig. 1 in a different sectional representation. Fig. 3 shows a part A of Fig. 2 in more detail. Figs. 1 to 3 are described together hereinafter, unless specific reference is made.

The spring brake actuator 10 comprises an element 12 having an aperture 14. The spring brake actuator 10 comprises a sealing element 16 inserted into the aperture 14. The sealing element 16 is at least in part made from a swelling elastomer 18.

The aperture 14 is circular in cross-section, in this example. The sealing element 16 is circular in cross-section, in this example. The sealing element 16 is a plug 20, in this example.

As can best be seen in Fig. 3, the sealing element 16 comprises a first portion 22 inserted into the aperture 14. The sealing element 16 further comprises a second portion 24 configured to abut the element 12 when the first portion 22 is inserted into the aperture 14. The second portion 24 is, thus, configured as a stop for correctly positioning the sealing element 16 in the aperture. At least the first portion 22 is made from the swelling elastomer 18.

The sealing element 16 and in the example the first portion 22 exert pressure on a boundary surface 25 of the aperture 14. The swelling elastomer 18 provides for a high achievable pressure and, thus, for a high degree of tightness over a long period of time, even when the spring brake actuator 10 is exposed to various and severe weather conditions.

The spring brake actuator 10 comprises a chamber 26 and a housing 28 surrounding the chamber 26. The housing 28 is, in this example, the element 12 comprising the aperture 14. The spring brake actuator 10 is configured, in this example, as a spring brake actuator 30.

Fig. 4 shows a vehicle 40 comprising a brake system 42. The brake system 42 comprises a spring brake actuator 10. The spring brake actuator 10 comprises an element 12 having an aperture 14. The spring brake actuator 10 comprises a sealing element 16 inserted into the aperture 14. The sealing element 16 is at least in part made from a swelling elastomer 18. The spring brake actuator 10 may be configured like the one shown in Figs. 1 to 3.

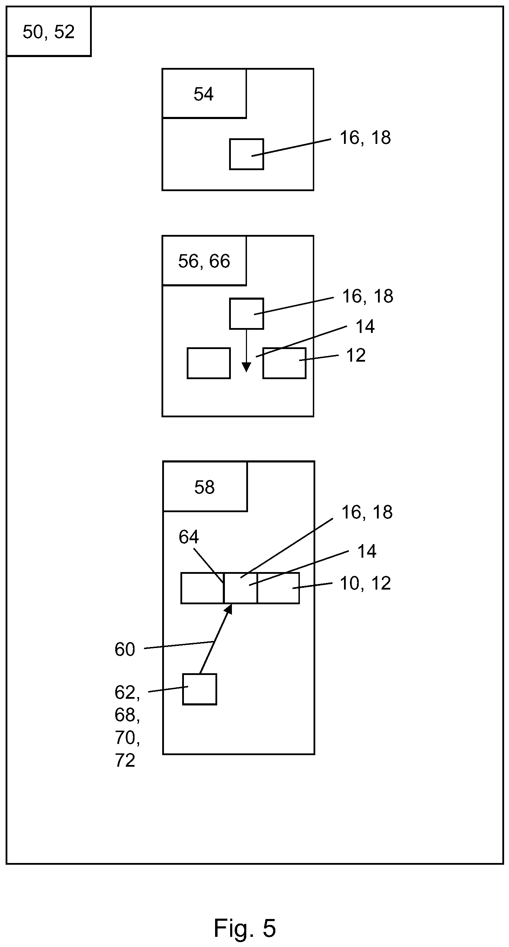

Fig. 5 illustrates a method 50 for manufacturing 52 a spring brake actuator 10. The spring brake actuator 10 comprises an element 12 having an aperture 14. The method 50 comprises providing 54 a sealing element 16 at least in part made from a swelling elastomer 18. The method 50 further comprises inserting 56 the sealing element 16 into the aperture 14. The method 50 further comprises swelling 58 the sealing element 16 by exposing 60 the sealing element 16 to a swelling agent 62.

The aperture 14 and the sealing element 16 in this example are configured to form a press-fit connection 64 before swelling 58. Inserting 56 the sealing element 16 into the aperture 14 includes establishing 66 the press-fit connection 64 between the sealing element 16 and aperture 14.

The swelling elastomer 18 may be configured to swell when exposed to oil 68. Thus, the swelling agent 62 may be oil 68.

The swelling elastomer 18 may be configured to swell when exposed to water 70, preferably saltwater 72. Thus, the swelling agent 62 may be water 70 or saltwater 72.

Where similar or identical elements are shown in different figures, reference numerals are assigned accordingly. Multiple descriptions of similar or identical elements have been avoided for the sake of clarity. Nevertheless, the embodiments of the figures can be combined with each other and developed further in accordance with the other embodiments and/or their individual features.

### List of references (part of the description)

- 10: spring brake actuator
- 12: element
- 14: aperture
- 16: sealing element
- 18: swelling elastomer
- 20: plug
- 22: first portion
- 24: second portion
- 25: boundary surface
- 26: chamber
- 28: housing
- 30: spring brake actuator
- 40: vehicle
- 42: brake system
- 50: method
- 52: manufacturing
- 54: providing
- 56: inserting
- 58: swelling
- 60: exposing
- 62: swelling agent
- 64: press-fit connection
- 66: establishing
- 68: oil
- 70: water
- 72: saltwater

## Claims

1. Spring brake actuator (10),
wherein the spring brake actuator (10) comprises an element (12),
wherein the element (12) comprises an aperture (14),
wherein the spring brake actuator (10) comprises a sealing element (16) inserted into the aperture (14),
**characterized in that**
the sealing element (16) is at least in part made from a swelling elastomer (18).

2. Spring brake actuator (10) according to claim 1,
wherein the swelling elastomer (18) is configured to swell when exposed to oil (68).

3. Spring brake actuator (10) according to one of the preceding claims,
wherein the swelling elastomer (18) is configured to swell when exposed to water (70), preferably saltwater (72).

4. Spring brake actuator (10) according to one of the preceding claims,
wherein the aperture (14) is circular in cross-section.

5. Spring brake actuator (10) according to one of the preceding claims,
wherein the sealing element (16) is circular in cross-section.

6. Spring brake actuator (10) according to one of the preceding claims,
wherein the sealing element (16) is a plug (20).

7. Spring brake actuator (10) according to one of the preceding claims,
wherein the sealing element (16) comprises a first portion (22) inserted into the aperture (14).

8. Spring brake actuator (10) according to one of the preceding claims,
wherein the sealing element (16) comprises a second portion (24) configured to abut the element (12) when the first portion (22) is inserted into the aperture (14).

9. Spring brake actuator (10) according to one of the preceding claims,
wherein the sealing element (16) comprises a first portion (22) inserted into the aperture (14),
wherein at least the first portion (22) is made from the swelling elastomer (18).

10. Spring brake actuator (10) according to one of the preceding claims,
wherein the spring brake actuator (10) comprises a chamber (26),
wherein the element (12) is a housing (28) surrounding the chamber (26).

11. Brake system (42) for a vehicle (40),
wherein the brake system (42) comprises a spring brake actuator (10) according to one of the preceding claims.

12. Vehicle (40),
comprising a spring brake actuator (10) according to one of claims 1 to 10 and/or a brake system according to claim 11.

13. Method (50) for manufacturing (52) a spring brake actuator (10),
wherein the spring brake actuator (10) comprises an element (12),
wherein the element (12) comprises an aperture (14),
wherein the method (50) comprises:
providing (54) a sealing element (16) at least in part made from a swelling elastomer (18);
inserting (56) the sealing element (16) into the aperture (14);
swelling (58) the sealing element (16) by exposing (60) the sealing element (16) to a swelling agent (62).

14. Method (50) according to claim 13,
wherein the aperture (14) and the sealing element (16) are configured to form a press-fit connection (64) before swelling (58);
wherein inserting (56) the sealing element (16) into the aperture (14) includes establishing (66) the press-fit connection (64) between the sealing element (16) and aperture (14).
